# EUROPEAN PATENT APPLICATION

(11) **EP 1 662 395 A2**
(43) Date of publication of application: **31.05.2006**
(21) Application number: 05251181.3
(22) Date of filing: 28.02.2005
(51) Int. Cl.: G06F 11/07

(54) **Information processing system**

(30) Priority: 26.11.2004 JP 2004341463
(71) Applicant: FUJITSU LIMITED, Kawasaki-shi, Kanagawa 211-8588 (JP)
(72) Inventor: Shimizu, Masayuki, Fujitsu Limited, Kawasaki-shi, Kanagawa 211-8588 (JP)
(74) Representative: Hitching, Peter Matthew

(57) **Abstract**

In an information processing system comprising a redundantly furnished plurality of second information processing apparatuses (20) being commonly connected with a first information processing apparatus (10) through an information transmission path to supervise the first information processing apparatus (10), and a third information processing apparatus (50) being connected with the second information processing apparatus through an information network (40) to manage the second information processing apparatus, wherein each of the second information processing apparatuses (20) comprises a connection confirmation control logic for trying to transmit connection confirmation information to the third information processing apparatus (50) through the information network (40) in compliance with an instruction being given by the one representative second information processing apparatus, and the third information processing apparatus (50) comprises a maintenance management control logic for collecting the connection confirmation information arriving from each of the second information processing apparatuses (20) and transmitting collected results by e-mail to a manager of the first information processing apparatus (10).

## Description

### Background of the Invention

### Field of the Invention

The present invention relates to an information processing system, a control method of same, a supervisory apparatus, a maintenance management apparatus, a supervisory program and a maintenance management program, and in particular to a supervisory technique for an information processing apparatus required for a stable operation for a long period of time, and further to an effective technique applicable to a remote maintenance technique, et cetera, by utilizing a network.

### Description of the Related Art

In conventional information processing apparatuses such as servers required to provide a stable operation, a continuous supervision of error status, unaffected by a failure in a supervisory apparatus, has been enabled by furnishing a plurality of supervisory apparatuses redundantly for the aforementioned supervision of the information processing apparatus for instance as seen in the patent document 1 listed below. It is also conceivable to perform an error information monitoring and a centralized management for supervisory apparatuses by connecting the plurality thereof to a remotely located maintenance management center by way of a network.

There is also a method for a representative supervisory apparatus, among a plurality thereof being furnished redundantly, to report an error status as disclosed by the patent document 2 listed below.

Incidentally, when furnishing supervisory apparatuses redundantly and managing them remotely at a maintenance center, an independent communication path becomes a necessity for connection between the individual supervisory apparatus and the maintenance center. In other words, in case the respective communication paths between the maintenance center and each supervisory apparatus are made common, a failed representative supervisory apparatus may not be replaceable by another of such apparatus if there is a failure in the common communication path, hence all the supervisory apparatuses becoming incommunicable with the maintenance center, and thus making the redundancy of supervisory apparatuses meaningless.

When thus furnishing the supervisory apparatuses redundantly and making the communication path between each supervisory apparatus and the maintenance center independent from one another, it is necessary to confirm a connection between each supervisory apparatus and the maintenance center one by one at the time of starting up the supervisory system in preparation of starting up a random supervisory apparatus for replacing a failed one.

In the case of a plurality of supervisory apparatuses being present under management, however, a cumbersome operation is required for each of the plurality thereof such as a confirmation of connection by the operator of the supervisory apparatus individually starting up the connection program and trying to connect with the maintenance center, while the management center repeatedly sending a response mail to the installer of the information processing apparatus as an object of supervision ("supervision object (information) apparatus" hereinafter) for confirming the connection result of every applicable apparatus, taking time in proportion to the number of such installed apparatuses. Such has been a technical problem.

In recent years, a centralized management of many information processing apparatuses by installing them in a specific site has become common where a redundancy of supervisory apparatuses is inevitable for maintaining a stable operation, making it increasingly cumbersome to operate the connection confirmations respectively for the supervisory apparatuses as described above.

Meanwhile, if the network is erratic between the supervisory apparatus, having no problem, and the maintenance center, then there is no way for the maintenance center to judge whether the failure occurring in a supervisory apparatus is caused by itself or the network, making the maintenance center unable to correctly provide the supervisory apparatus with a solution to the failure. Such has been another technical problem.

And in the case of having a representative supervisory apparatus from among the redundantly furnished ones report to the maintenance center, a failure in the representative supervisory apparatus will be replaced by another representative apparatus being chosen from among the remaining ones for a continuous supervision. If the problem is stemming from a failure in the network, however, a switching from the representative to another supervisory apparatus will not occur because there is nothing wrong with the representative supervisory apparatus, hence a report will not reach the maintenance center. Such is yet another technical problem.

[Patent document 1] Japanese patent laid-open application publication 2003- 308261

[Patent document 2] Japanese patent laid-open application publication 2001- 23064

### Summary of the Invention

The purpose of the present invention is to provide a technique capable of performing a quick and correct operation of confirming connection for a remote maintenance of redundantly furnished supervisory apparatuses by using a network in a short time.

Another purpose of the present invention is to provide a technique capable of accomplishing a stable operation by redundantly furnishing supervisory apparatuses without being affected by a failure in network in order to perform a remote maintenance of redundantly furnished supervisory apparatuses by using a network.

Yet another purpose of the present invention is to provide a technique capable of achieving a stable operation by appropriately switching a failed supervisory apparatus to another without being affected by a failure in the network in order to perform a remote maintenance of redundantly furnished supervisory apparatuses by using a network.

The first aspect of the present invention is to provide an information processing system comprising a redundantly furnished plurality of second information processing apparatuses being commonly connected with a first information processing apparatus by way of an information transmission path in order to supervise the first information processing apparatus, and a third information processing apparatus being connected with the second information processing apparatus by way of an information network in order to manage the second information processing apparatus, wherein
each of the second information processing apparatuses comprises a connection confirmation control logic for trying to transmit connection confirmation information to the third information processing apparatus by way of the information network in compliance with an instruction being given by the one representative second information processing apparatus, and
the third information processing apparatus comprises a maintenance management control logic for collecting the connection confirmation information arriving from each of the second information processing apparatuses and transmitting a result of collecting the connection confirmation information by electronic mail ("e-mail" hereinafter) to a manager of the first information processing apparatus.

The second aspect of the present invention is to provide a control method for an information processing system comprising a redundantly furnished plurality of second information processing apparatuses being commonly connected with a first information processing apparatus by way of an information transmission path in order to supervise the first information processing apparatus, and a third information processing apparatus being connected with the second information processing apparatus by way of an information network in order to manage the second information processing apparatus, comprising:
a first process in which each of the second information processing apparatuses tries to transmit connection confirmation information to the third information processing apparatus by way of the information network in compliance with an instruction being given by the one representative second information processing apparatus; and
a second process in which the third information processing apparatus collects the connection confirmation information arriving from each of the second information processing apparatuses and transmits a result of collecting the connection confirmation information by e-mail to a manager of the first information processing apparatus.

The third aspect of the present invention is to provide a supervisory apparatus, being a supervisory apparatus connected to a supervision object apparatus by way of an information transmission path in order to supervise the supervision object apparatus, comprising a connection confirmation control logic for accomplishing the functions of
performing a connection confirmation with a maintenance management apparatus byway of a information network, prompted by an instruction from another of redundantly furnished supervisory apparatuses commonly connected with the information transmission path;
requesting another of the said supervisory apparatuses for a substitute transmission of connection error information indicating a failure in transmitting connection confirmation information, of the connection confirmation information and of an alternative connection path to the maintenance management apparatus by way of said information transmission path, if the connection confirmation is failed; and
performing the substitute transmission requested by the other supervisory apparatus.

The fourth aspect of the present invention is to provide a maintenance management apparatus which is a maintenance management apparatus for collecting maintenance management information related to a plurality of redundantly furnished supervisory apparatuses, being connected with a supervision object apparatus by way of an information transmission path, from the supervisory apparatuses via an information network, comprising a maintenance management control logic for
collecting connection confirmation information indicating a successful connection with the maintenance management apparatus arriving from each of a plurality of the supervisory apparatuses and transmitting a result of collecting the connection confirmation information by e-mail to a manager of the supervision object apparatus.

The fifth aspect of the present invention is to provide a signal carrying a supervisory program, which is for controlling a supervisory apparatus being connected with a supervision object apparatus by way of an information transmission path in order to supervise the supervision obj ect apparatus, making the supervisory apparatus accomplish the functions of
performing a connection confirmation with a maintenance management apparatus by way of a information network, prompted by an instruction from another of redundantly furnished supervisory apparatuses commonly connected with the information transmission path;
requesting another of the said supervisory apparatuses for a substitute transmission of connection error information indicating a failure in transmitting connection confirmation information, of the connection confirmation information and of an alternative connection path to the maintenance management apparatus by way of said information transmission path, if the connection confirmation is failed; and
performing the substitute transmission requested by the other supervisory apparatus.

The sixth aspect of the present invention is to provide a signal carrying a maintenance management program, which controls a maintenance management apparatus for collecting maintenance management information related to a plurality of redundantly furnished supervisory apparatuses, being connected with a supervision object apparatus by way of an information transmission path, from the supervisory apparatuses via an information network, making the maintenance management apparatus accomplish the functions of
collecting connection confirmation information indicating a successful connection with the maintenance management apparatus arriving from each of a plurality of the supervisory apparatuses and transmitting a result of collecting the connection confirmation information by e-mail to a manager of the supervision object apparatus.

### Brief Description of the Drawings

Fig. 1 is a sequence chart exemplifying an operation of an information processing system according to an embodiment of the present invention;
Fig. 2 is a conceptual diagram exemplifying a configuration of information processing system according to an embodiment of the present invention;
Fig. 3 is a block diagram exemplifying a configuration of supervisory apparatus constituting an information processing system according to an embodiment of the present invention;
Fig. 4 is a block diagram exemplifying a configuration of maintenance management apparatus constituting an information processing system according to an embodiment of the present invention;
Fig. 5 is a conceptual chart exemplifying information being used by a supervisory apparatus according to an embodiment of the present invention;
Fig. 6 is a conceptual chart exemplifying information being used by a supervisory apparatus according to an embodiment of the present invention;
Fig. 7 is a conceptual chart exemplifying information being used by a maintenance management apparatus according to an embodiment of the present invention;
Fig. 8 is a conceptual diagram exemplifying data transmitted at the time of connection confirmation by a supervisory apparatus according to an embodiment of the present invention;
Fig. 9 is a conceptual diagram exemplifying data transmitted at the time of connection confirmation by a supervisory apparatus according to an embodiment of the present invention;
Fig. 10 is a conceptual diagram exemplifying data transmitted at the time of error report by a supervisory apparatus according to an embodiment of the present invention;
Fig. 11 is a conceptual diagram exemplifying data transmitted at the time of error report by a supervisory apparatus according to an embodiment of the present invention;
Fig. 12 is a flow chart exemplifying an operation of a supervisory apparatus according to an embodiment of the present invention;
Fig. 13 is a flow chart exemplifying an operation of a supervisory apparatus according to an embodiment of the present invention;
Fig. 14 is a flow chart exemplifying an operation of a supervisory apparatus according to an embodiment of the present invention;
Fig. 15 is a flow chart exemplifying an operation of a supervisory apparatus according to an embodiment of the present invention;
Fig. 16 is a flow chart exemplifying an operation of a maintenance management apparatus according to an embodiment of the present invention;
Fig. 17 is a conceptual diagram exemplifying an e-mail transmitted at the time of a connection confirmation by a maintenance management apparatus according to an embodiment of the present invention; and
Fig. 18 is a conceptual diagram exemplifying an e-mail transmitted at the time of a connection confirmation by a maintenance management apparatus according to an embodiment of the present invention.

### Description of the Preferred Embodiments

A detailed description of an embodiment of the present invention will be given as follows while referring to the accompanying drawings.

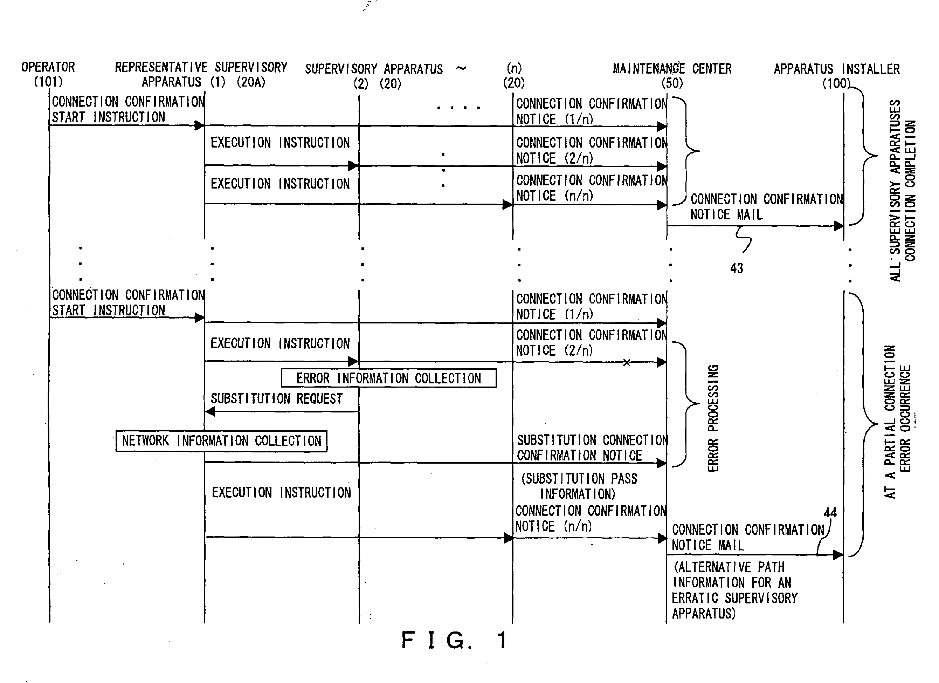

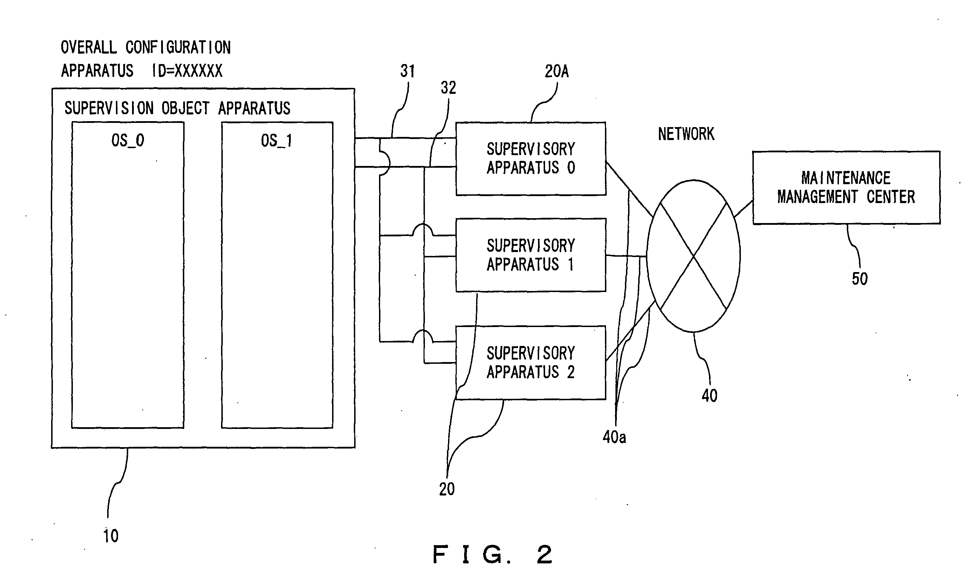

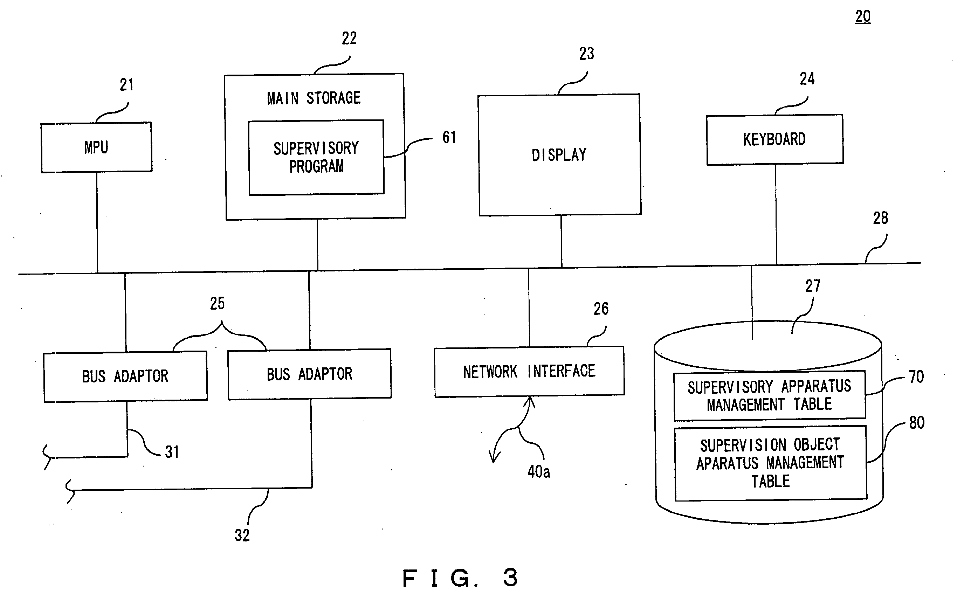

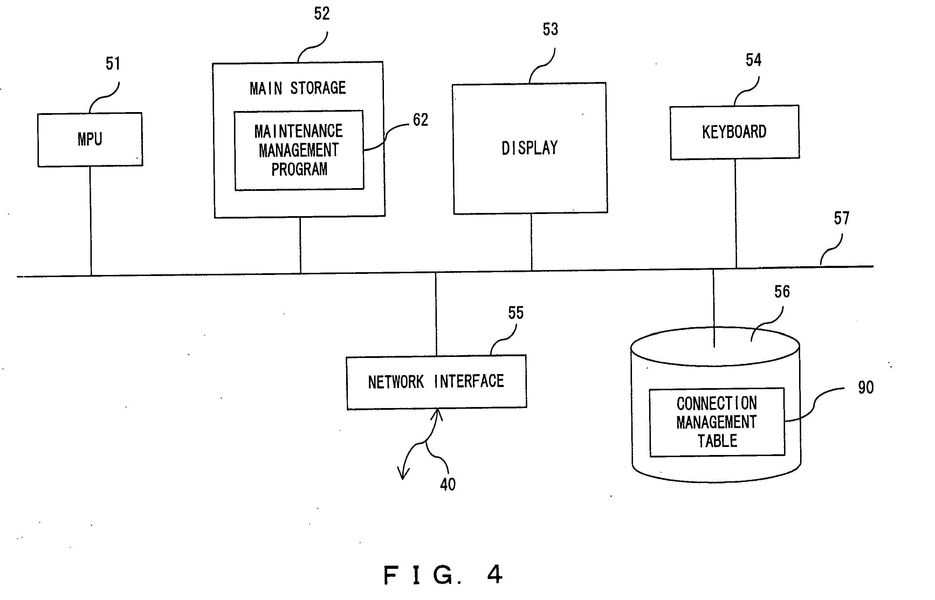

Fig. 1 is a sequence chart exemplifying anoperation of an information processing system according to an embodiment of the present invention; Fig. 2 is a conceptual diagram exemplifying a configuration of information processing system according to an embodiment of the present invention; Fig. 3 is a block diagram exemplifying a configuration of supervisory apparatus constituting an information processing system according to the present embodiment; and Fig. 4 is a block diagram exemplifying a configuration of maintenance management apparatus constituting an information processing system according to the present embodiment.

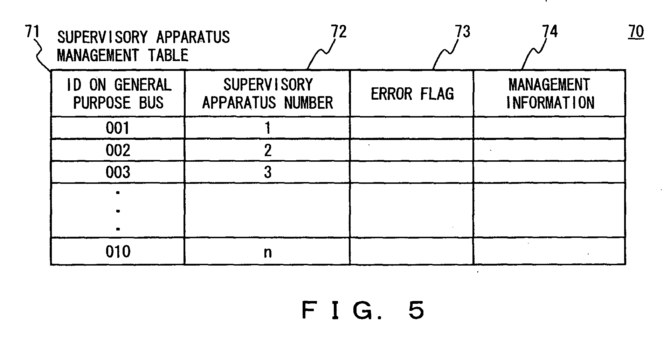

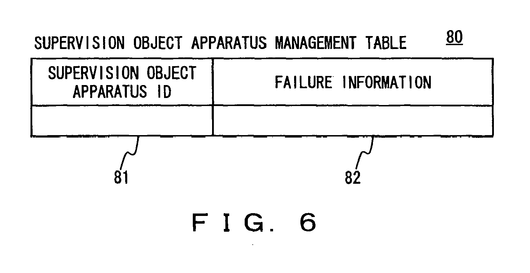

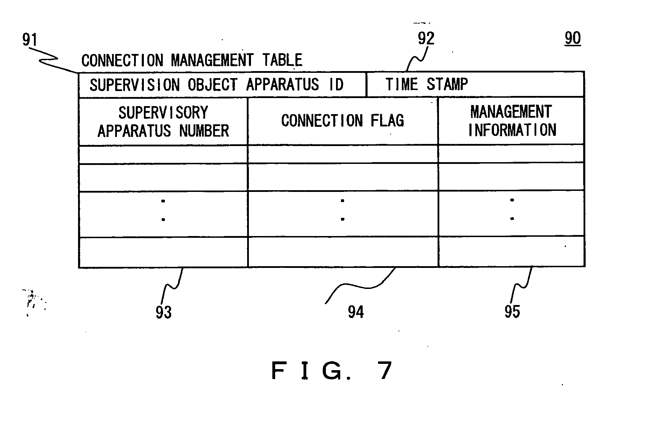

Figs. 5 and 6 are conceptual charts each exemplifying information being used by a supervisory apparatus according to the present embodiment; and Fig. 7 is a conceptual chart exemplifying information being used by a maintenance management apparatus according to the present embodiment.

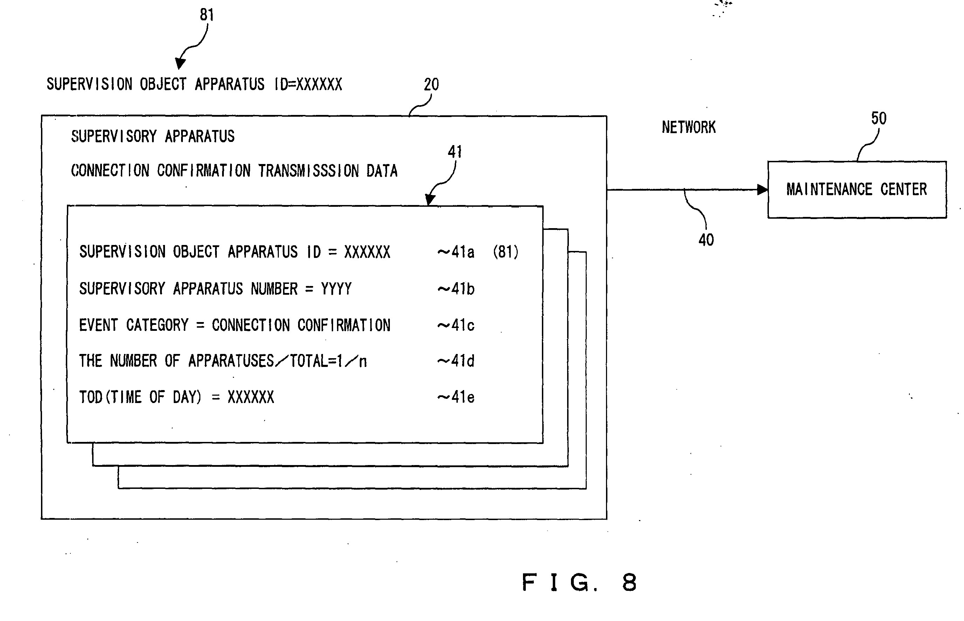

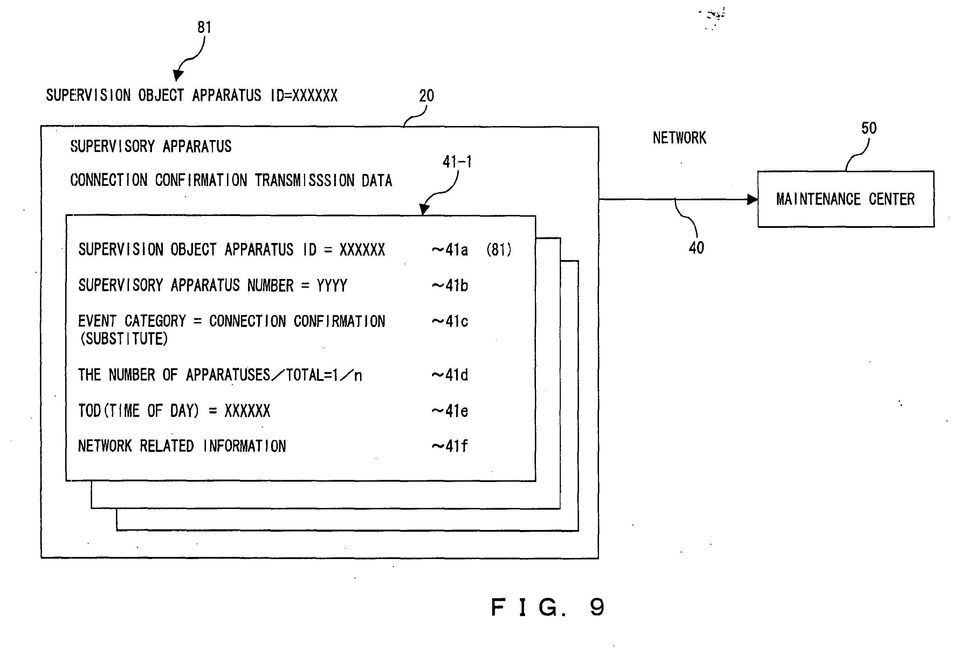

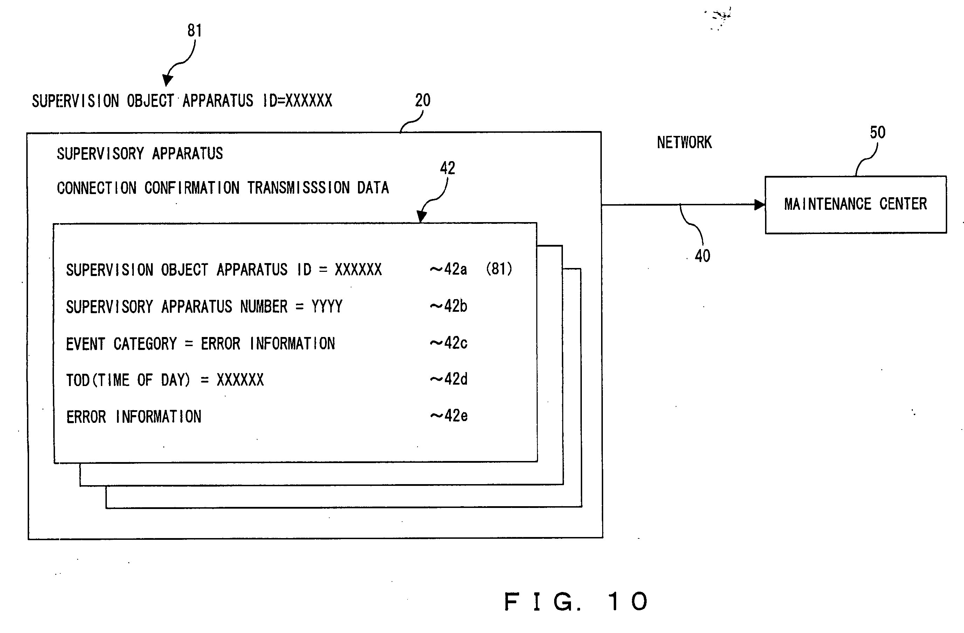

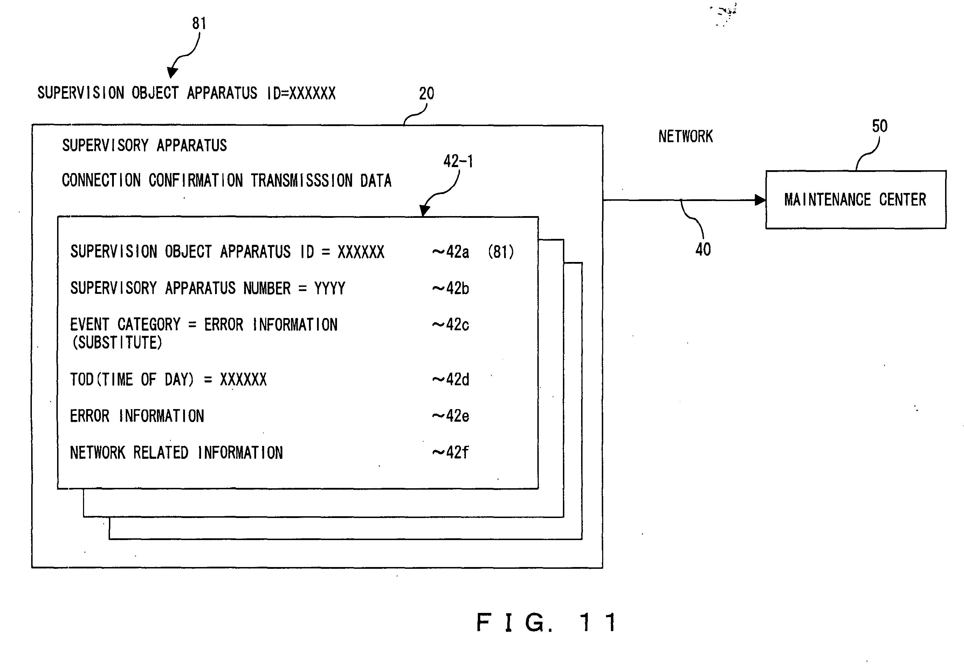

Figs. 8 and 9 are conceptual diagrams each exemplifying data transmitted at the time of connection confirmation by a supervisory apparatus according to the present embodiment; and Figs. 10 and 11 are conceptual diagrams exemplifying data transmitted at the time of error report by a supervisory apparatus according to the present embodiment.

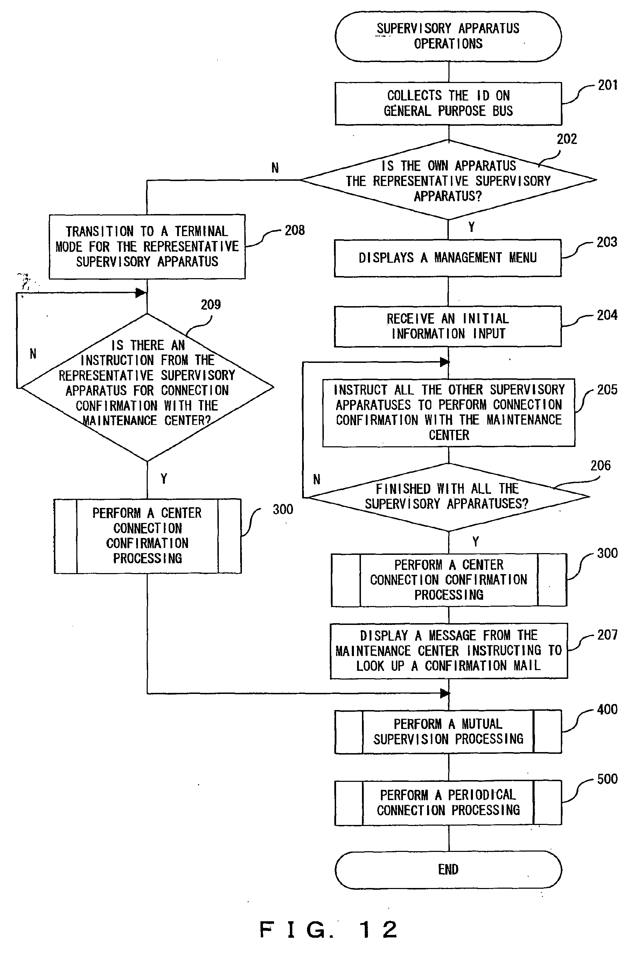

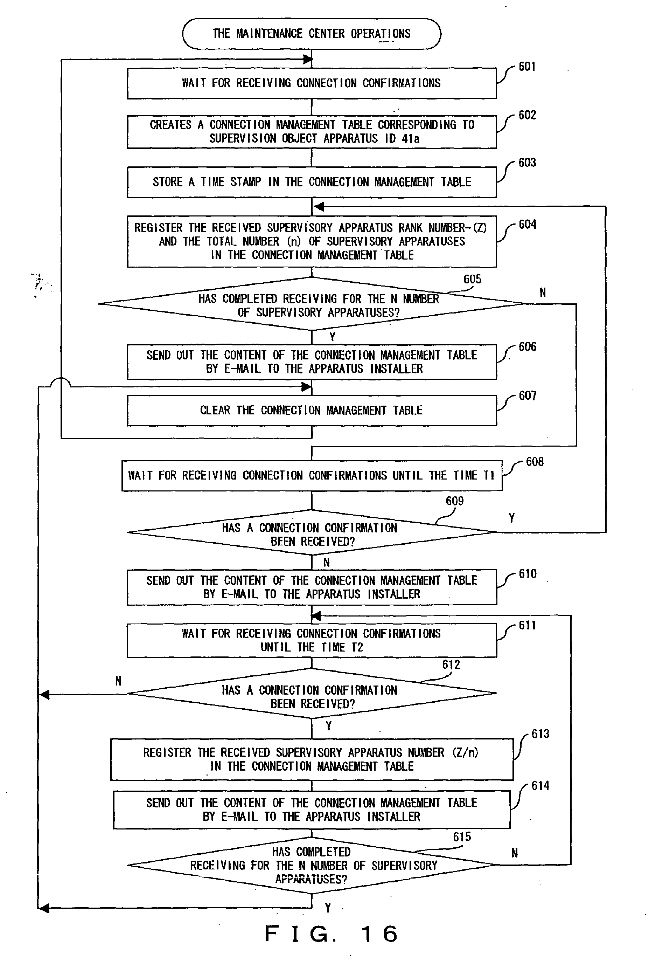

Figs. 12, 13, 14 and 15 are flow charts each exemplifying an operation of a supervisory apparatus according to the present embodiment; and Fig.16 is a flow chart exemplifying an operation of a maintenance management apparatus according to the present embodiment.

As exemplifiedby Fig. 2, an information processing system according to the present embodiment comprises for instance a supervision object apparatus 10 (i.e., first information processing apparatus) made up of information apparatuses such as a mainframe computer required for a stable continuous operation for a long period of time, a server apparatus, et cetera, and a redundantly furnished plurality of supervisory apparatuses 20 (i.e., second information processing apparatus) for supervising the operations of the supervision object apparatus 10.

Each of the supervisory apparatuses 20, being interconnected by a redundantly furnished general purpose bus and a general purpose bus, is also connected to the supervision object apparatus 10.

That is, the information exchanges among the supervisory apparatuses 20, and the information exchange between each of the supervisory apparatuses 20 and the supervision object apparatus 10, are adequately enabled if either one of the furnished general purpose buses 31 and 32 fails.

As such, a redundantly furnished plurality of supervisory apparatuses 20 are provided for the supervision object apparatus 10 in order to assure a stable supervision in the present embodiment.

Each of the supervisory apparatuses 20 is connected to an information network 40 such as a wide area information network by way of a mutually independent plurality of communication paths 40a, and is further connected with, for instance, a remotely located maintenance management apparatus 50 (i.e., third information processing apparatus) by way of the information network 40.

As exemplifiedby Fig. 3, the supervisory apparatus 20 according to the present embodiment for example comprises an MPU 21 for controlling the whole system, a main storage 22 for storing a program and data executed by theMPU 21, a display 23 for visualizing the information for providing to the user, a keyboard 24 provided for the user inputting information, a plurality of general purpose bus adaptors 25 for connecting with a redundantly furnished general purpose bus 31 and a bus 32, a network interface 26 for connecting with an information network 40 by way of a communication path 40a, a nonvolatile storage apparatus 27 for storing information renewably and sustainedly and an internal bus 28 for interconnecting each of the aforementioned components.

In the case of the present embodiment, the main storage 22 stores a supervisory program 61 (i.e., connection confirmation control logic) for the supervisory apparatus 20 accomplishing processing as exemplified by the later described flow charts shown by Figs. 12 through 15. The supervisory program 61 is stored in the nonvolatile storage apparatus 27 and will be loaded onto the main storage 22 so as to be executed by theMPU 21 as required. Alternatively the supervisory program 61 may be loaded onto the nonvolatile storage apparatus 27 from the outside by way of the communication path 40a and the information network 40.

The nonvolatile storage apparatus 27 also stores such information as a later described supervisory apparatus management table 70 and supervision object apparatus management table 80 which will be accessed by an MPU 51.

As exemplified by Fig. 4, a maintenance management apparatus 50 according to the present embodiment comprises an MPU 51 for controlling the whole system, a main storage 52 for storing a program and data to be executed by the MPU 51, a display 53 for visualizing the information for displaying, a keyboard 54 for the user inputting information, a network interface 55 for connecting the maintenance management apparatus 50 to the information network 40, a nonvolatile storage 56 for renewably and sustainedly storing information and an internal bus 57 for interconnecting each of the aforementioned components.

In the case of the present embodiment, the main storage stores a maintenance management program 62 (i.e., maintenance management control logic) which will be executed by the MPU 51 for the maintenance management apparatus 50 accomplishing the processing exemplified by a later described flow chart associated with Fig. 16.

The maintenance management program 62 is stored in the nonvolatile storage 56, read out to the main storage 52 and executed by the MPU 51. Alternatively, the maintenance management program 62 may be installed into the nonvolatile storage 56 from the outside by way of the information network 40.

The nonvolatile storage 56 stores a later described connection management table 90 which will be accessed by the MPU 51.

As exemplifiedby Fig. 5, the supervisory apparatus management table 70 is installed in each of the supervisory apparatuses 20 and used for respectively managing the apparatus itself and the redundantly furnished other supervisory apparatuses 20.

That is, the supervisory apparatus management table 70 stores the ID on general purpose bus 71 assigned fixedly and uniquely to each supervision object apparatus 10 and each of a plurality of supervisory apparatuses 20 all of which are connected onto the general purpose bus 31 (and general purpose bus 32), the supervisory apparatus number 72 assigned changeably and uniquely to each of the plurality of supervisory apparatuses 20, the error flag 73 for managing a presence or absence of error in each supervisory apparatus 20 and the management information 74 with regard to each supervisory apparatus 20 with the aforementioned information being in correspondence to the ID on general purpose bus 71 respectively.

The supervision object apparatus management table 80 exemplifiedby Fig. 6 is installed in each supervisory apparatus 20, and is stored by the supervision object apparatus ID 81 being uniquely assigned to the supervision object apparatus 10 and by failure information 82 occurring in the supervision object apparatus 10 being specified by the supervision object apparatus ID 81.

The connection management table 90 exemplified by Fig. 7 is installed in the maintenance management apparatus 50 and used for managing connection status of the supervisory apparatus 20 being allocated to each supervision object apparatus 10 with the aforementioned maintenance management apparatus 50.

That is, the connection management table 90 stores the supervision object apparatus ID 91 for specifying the supervision object apparatus 10 corresponding to the supervisory apparatus 20 as the object of connection management, the time stamp 92 indicating the time of day ("TOD" hereinafter) when the connection management table 90 is generated, the supervisory apparatus number 93 (corresponding to the above noted supervisory apparatus number 72) being assigned to the supervisory apparatus 20 as the object of connection management, the connection flag 94 indicating a completion or incompletion of connection confirmation and the management information 95 for managing each supervisory apparatus 20 being specified by the supervisory apparatus number 93.

Fig. 8 exemplifies a connection confirmation transmission data 41 transmitted at the time of connection confirmation by each supervisory apparatus 20 to the maintenance management apparatus 50.

The connection confirmation transmission data 41 includes a supervision object apparatus ID 41a for identifying the supervision object apparatus 10 to which the sending supervisory apparatus 20 belongs, a supervisory apparatus number 41b indicating the sending supervisory apparatus 20, an event category 41c, constitution information 41d and a transmission TOD 41e. The event category 41c indicates the category of event prompting to send the connection confirmation transmission data 41. The constitution information 41d includes a pair of information being made up of the total number of the redundantly furnished supervisory apparatuses 20 for supervising the aforementioned supervision object apparatus 10 and a supervisory apparatus number 41b for the sending supervisory apparatus 20.

Fig. 9 exemplifies a connection confirmation substitute transmission data 41-1 transmitted as a substitute transmission at the time of connection confirmation.

The connection confirmation substitute transmission data 41-1 further includes network related information 41f in addition to the content of the above noted connection confirmation transmission data 41. The network related information 41f includes the network information related to the communication path 40a and information network 40 collected and handed out to a substitute supervisory apparatus 20 by the supervisory apparatus 20 which has fallen to a path failure, information on an alternative path collected by the substitute supervisory apparatus 20, et cetera.

Fig. 10 exemplifies error report transmission data 42 transmitted at the time of reporting error in a supervision object apparatus 10 to the maintenance management apparatus 50 by a supervisory apparatus 20.

The error report transmission data 42 includes the supervision object apparatus ID 42a for a supervision object apparatus 10, the supervisory apparatus number 42b for the sending supervisory apparatus 20, an event category 42c, a transmission TOD 42d and error information 42e indicating the detail of the error occurring in a supervision object apparatus 10.

Fig. 11 exemplifies an error report substitute transmission data 42-1 for use by a supervisory apparatus 20 substituting itself for another supervisory apparatus 20 in reporting error information thereof to the maintenance management apparatus 50.

The error report substitute transmission data 42-1 includes network related information 42f such as the network information related to the communication path 40a and information network 40 that has been collected and handed out to a substitute supervisory apparatus 20 by a failed supervisory apparatus 20, which is different from the connection confirmation transmission data 41. In this case, information indicating "error report" and "substitute transmission" is set for the event category 42c.

As described above, a supervision obj ect apparatus ID 81 is assigned to each chassis of the supervision object apparatuses 10 required for assuring a stable operation.

The maintenance management apparatus 50 (i.e., maintenance center) identifies a group to which the supervision object apparatus 10 belongs by the supervision object apparatus ID 41a and the supervision object apparatus ID 42a (that is, supervision object apparatus ID 81) included in the report contents shown by Figs. 8 through 11 (i.e., connection confirmation transmission data 41, connection confirmation substitute transmission data 41-1, error report transmission data 42 and error report substitute transmission data 42-1).

Meanwhile, although a server apparatus as the supervision object apparatus 10 has a plurality of partitions within itself which are operated by the respectively different operating systems (OS), they are all managed by a single supervision object apparatus ID 81 in the case of the present embodiment. That is, the supervision object apparatus 10 is managed by a unit of mechanical case for a failure supervision provided by the supervisory apparatus 20.

The following describes operations of the present embodiment.

When supervisory apparatuses 20 are started initializing, they identify one another and establish a representative supervisory apparatus 20A. The supervisory apparatuses 20 compare the connection positions (i.e., ID on general purpose bus 71) for one another on the general purpose buses 31 and 32 and elect the supervisory apparatus 20 at the youngest connection position as the representative supervisory apparatus 20A.

That is, each of the supervisory apparatuses 20 is assigned by a continuous supervisory apparatus number 72 in order of the ID on general purpose bus 71, and the supervisory apparatus 20 having the youngest number in the supervisory apparatus number 72 becomes the representative supervisory apparatus 20A.

And, configuration such as the number of connected supervisory apparatuses 20 and status are comprehended in this process and accordingly the information such as the ID on general purpose bus 71, the supervisory apparatus number 72, the error flag 73, the management information 74, et cetera, are stored in the supervisory apparatus management table 70 possessed by each of the supervisory apparatuses 20.

Only the representative supervisory apparatus 20A collects a detail of error information for the supervision object apparatus 10 and reports it to the maintenance center. If the representative supervisory apparatus 20A becomes inoperable, then the remaining apparatuses elect a new representative supervisory apparatus 20A.

Meanwhile, each supervisory apparatus 20 has the detail of error information collected from the supervision object apparatus 10 by the representative supervisory apparatus 20A in the supervision object apparatus management table 80 being installed therein, thus being enabled for taking over the supervisory operation immediately for the supervision object apparatus 10 when the apparatus itself is elected as the representative supervisory apparatus 20A.

All of the plurality of supervisory apparatuses 20 must be made normally connectible to the maintenance management apparatus 50 located in the maintenance center.

Therefore, it is necessary to perform a connection confirmation with the maintenance center when installing an apparatus.

As the installer of an apparatus (i.e., operator 101) selects a connection confirmation from among the menu started out on the representative supervisory apparatus 20A, the connection confirmations are automatically performed by the representative supervisory apparatus 20A and all the other supervisory apparatuses 20 being automatically started by the instruction from the aforementioned representative supervisory apparatus 20A. The maintenance management apparatus 50 at the maintenance center receives a connection report (i.e., connection confirmation transmission data 41) including the total number of supervisory apparatuses 20 (i.e., constitution information 41d shown by Fig. 8) from the representative supervisory apparatus 20A.

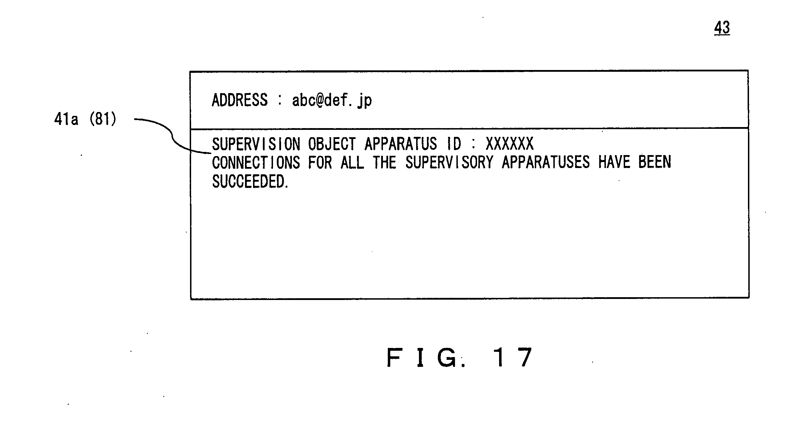

As the connection reports arrive from all the supervisory apparatuses 20, the maintenance management apparatus 50 at the maintenance center sends out e-mail (i.e., connection confirmation mail 43) to the apparatus installer terminal 100 of the apparatus installer in such context as shown by Fig. 17 as a notice of confirming normal connections for all the communication paths. The upper part of the sequence chart of Fig. 1 shows such successful connection confirmations with all the supervisory apparatuses 20 within a predefined time.

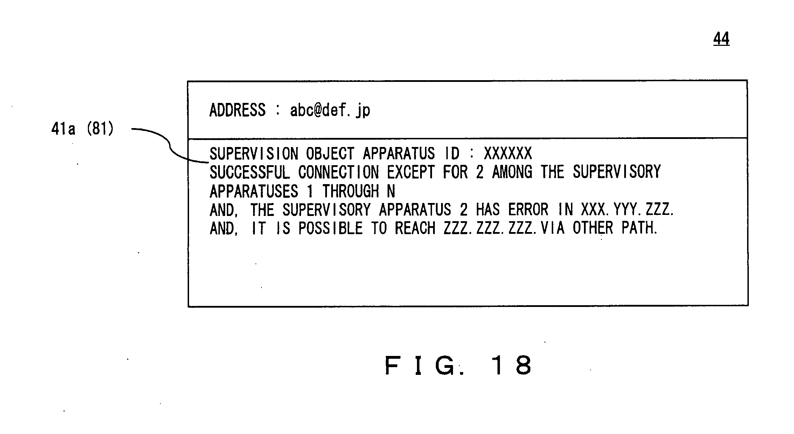

If connection confirmations are done only for a part of the paths (i.e., a part of supervisory apparatuses 20) within a predefined time, the maintenance management apparatus 50 at the maintenance center sends out a connection confirmation mail 44 (i.e., e-mail) to the apparatus installer in such context as shown by Fig. 18 as a notice of confirming connections with a part of the supervisory apparatuses 20. That is, while the maintenance center waits for a completion of connection confirmations for all the supervisory apparatuses 20 until the end of a maximum time T1 (e.g., 10 minutes), the maintenance center sends out notice of a partial connection confirmation, if only a part of the apparatuses is confirmed for the connection within the time T1 in the present embodiment.

When failing to connect with the maintenance center, the supervisory apparatus 20 collects the network information related to the communication path 40a and the information network 40 with which the supervisory apparatus itself is connected and requests another supervisory apparatus 20 (e.g., the representative supervisory apparatus 20A) for reporting to the maintenance center as a connection confirmation substitute transmission data 41-1 shown by Fig. 9. Meanwhile, the other supervisory apparatus 20, having received the request, collects also the network information, compiles network related information 41f including the information being handed out by the requesting supervisory apparatus and accordingly reports it. Having received the information about the point of failure in the network, the maintenance center will be able to issue an instruction for a corrective action with regard to the error in setting information or the point of failure in the network connection.

Meanwhile, if the elapsed time from the completion of a part of connection paths for supervisory apparatuses 20 to the arrival of error information is within the time T1, the maintenance center sends back to the apparatus installer terminal 100 of the apparatus installer by a single e-mail (e.g., connection confirmation mail 44 shown by Fig. 18) compiling the facts that connection confirmations for a part of the paths has succeeded while the remaining part has failed, together with an analysis result for the failed parts. The lower part of Fig. 1 exemplifies a sequence of substitute transmission between the supervisory apparatuses 20 at the time of error.

If the elapsed time to an arrival of error information at the maintenance center is more than T1, the maintenance management apparatus 50 sends out one e-mail (i.e., connection confirmation mail 44) notifying of confirming connection for a part of apparatuses in a T2 time (e.g., one day) (larger than T1) followed by another e-mail notifying a failed connection for a part of the paths and the analysis result of the failed network information to the apparatus installer terminal 100.

In the meantime, a condition of the information network 40 or the communication path 40a may change after a successful connection of the supervisory apparatuses 20.

In order to confirm a normalcy of the network connections, all the supervisory apparatuses 20 perform a periodical connection with the maintenance management apparatus 50 at the maintenance center. In the periodical connection, the supervisory apparatuses 20 notify the maintenance center of the next periodical connection time. The maintenance center can also detect an abnormality if the periodical connection is not done past the scheduled time.

If an abnormality occurs in a supervision object apparatus 10, the representative supervisory apparatus 20Acollects the error information within the supervision object apparatus 10 by way of the redundantly furnished general purpose bus 31 and the general purpose bus 32. The representative supervisory apparatus 20A also notifies the maintenance management apparatus 50 at the maintenance center of the collected information as an error report in which the error report transmission data 42 exemplified by Fig. 10 is used.

If an error occurs in a non-representative supervisory apparatus 20, the supervisory apparatus 20 collects the error information about itself, and also requests the representative supervisory apparatus 20A for reporting the error information about the aforementioned supervisory apparatus 20 to the maintenance management apparatus 50.

If the representative supervisory apparatus 20A finds itself erratic, it collects the error information about itself and also requests another supervisory apparatus 20 (i.e., a representative supervisory apparatus 20A in the next rank of the supervisory apparatus number 72 in this case) for notifying the error information about the erratic representative supervisory apparatus 20A and starting operation as new representative supervisory apparatus 20A, thus ending an operation of itself as a supervisory apparatus 20.

The switching of representative supervisory apparatuses 20A will be notified to all the other supervisory apparatuses 20Aby way of the general purpose buses 31 and 32.

The error report substitute transmission data 42-1 shown by Fig. 11 indicates information used for a substitute report when an error occurs either in a supervisory apparatus 20 or the representative supervisory apparatus 20A as described above. The error report substitute transmission data 42-1 includes network related information 42f in addition to the format for the connection confirmation transmission data 41.

If a connection of the representative supervisory apparatuses 20A by way of the information network 40 does not work out and hence a report does not reach the maintenance management apparatus 50 at the maintenance center, the representative supervisory apparatuses 20A collects the information about the communication path 40a and the information network 40, and then requests another supervisory apparatus 20 for notifying the maintenance center of the network information and the error information.

As described above, if the representative supervisory apparatus 20A is normal while the communication path 40a and the information network 40 between the representative supervisory apparatus 20A and the maintenance management apparatus 50 is problematic, the representative supervisory apparatus 20A can be switched correctly to another supervisory apparatus 20 in the present embodiment.

The supervisory apparatus 20, having received the above described request, also collects the information relating to the information network 40 and reports the collected information content together with the content requested by the representative supervisory apparatus 20A to the maintenance management apparatus 50 at the maintenance center by using a substitute transmission indicating that it is a transmission being requested for. A transmission data format the same as the connection confirmation substitute transmission data 41-1 as exemplified in Fig. 9 can be used in this occasion.

The maintenance management apparatus 50 at the maintenance center is able to identify an abnormality of connection condition by receiving the substitute transmission from the representative supervisory apparatus 20A. The report reaching at the maintenance center as to where the error is occurring in the information network 40 and the communication path 40a enables the maintenance management apparatus 50 at the maintenance center to notify the operator of the representative supervisory apparatus 20A and the apparatus installer terminal 100 of an error in setting information or the connection condition of the information network 40 and the communication path 40a. As a result, the apparatus installer is empowered to instruct the supervisory apparatuses 20 and the maintenance management apparatus 50 correctly what to do to solve the problem in which part.

The following describes operations of the representative supervisory apparatus 20A and the maintenance management apparatus 50 of the above described configuration according to the present embodiment.

As exemplified by Fig. 12, each supervisory apparatus 20 collects the ID on general purpose bus 71 on the general purpose buses 31 and 32 at the initial startup (step 201), judges whether or not the apparatus itself is the representative supervisory apparatus 20A, and if it is the representative supervisory apparatus 20A then displays a management menu on the display 23 (step 203) for the operator to input the initial information in which information required for supervising the supervision object apparatus 10(step 204), for communicating with the maintenance management apparatus 50, et cetera, are included. The initial information is shared with the other supervisory apparatuses 20 and retained by each supervisory apparatus 20.

Then instructs all the other supervisory apparatuses 20 to perform connection confirmations with the maintenance center (i.e., maintenance management apparatus 50) (steps 205 and 206).

Then, the maintenance management apparatus 50 finishes a center connection confirmation processing 300 for the apparatus itself and outputs a message on the display 23 instructing the operator 101 to look up the connection confirmation mail from the maintenance center on the apparatus installer terminal 100 (step 207).

Then, if performs a mutual supervision processing 400 and a periodical connection processing 500, which is respectively operated by each supervisory apparatus 20 independently in the background.

Having found out not to be the representative supervisory apparatus 20A in the above noted step 202, a supervisory apparatus 20 becomes a terminal therefor and transitions to a terminal mode for displaying the information being notified by the representative supervisory apparatus 20A by way of the general purpose buses 31 and 32 on the display 23 (step 208). That is, a similar window as shown by the display 23 on the representative supervisory apparatus 20A will be shown by the display on the supervisory apparatus 20 for instance.

Subsequently, waiting for the arrival of instruction by the representative supervisory apparatus 20A for performing a connection confirmation with the maintenance center (step 209), each of supervisory apparatuses 20 performs a center connection confirmation processing 300.

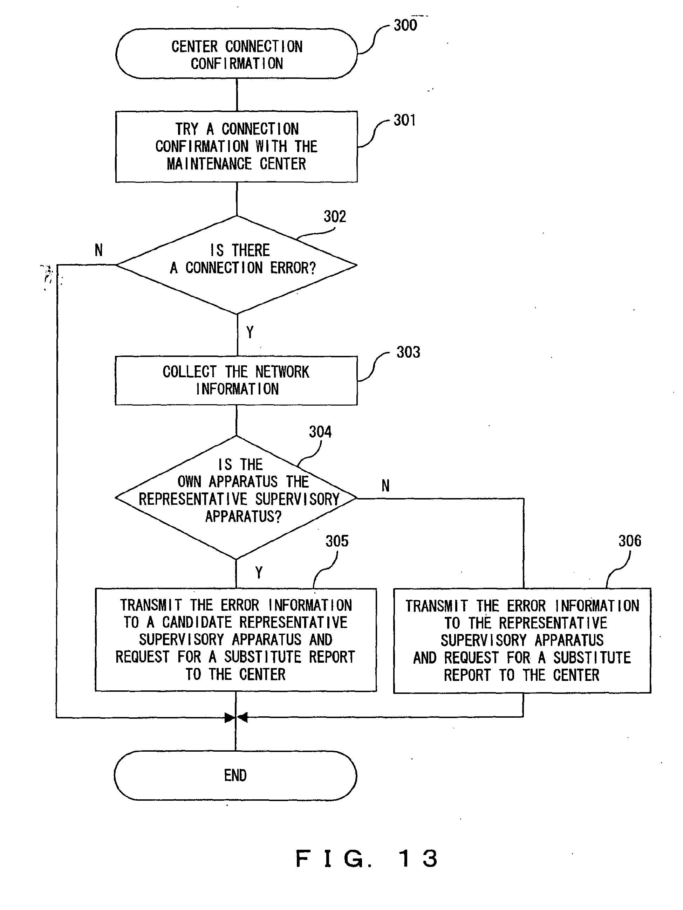

As exemplified by the flow chart in Fig. 13, the above noted center connection confirmation processing 300 tries a connection confirmation (that is, transmission of a connection confirmation transmission data 41) with the maintenance management apparatus 50 at the maintenance center by way of the communication path 40a and the information network 40 (step 301) and, if a connection error is occurring (step 302), collects the network information in the communication path 40a and information network 40 with which the own apparatus is connected (step 303).

Then, it judges whether or not the own apparatus is the representative supervisory apparatus 20A (step 304), and, if it is the representative supervisory apparatus 20A, transmits the network information of the own apparatus to a supervisory apparatus 20 of the next rank and request for a substitute report (i.e., transmission of a connection confirmation substitute transmission data 41-1 shown by Fig. 9) to the maintenance center (step 305).

On the other hand if its own apparatus is not a representative supervisory apparatus 20A, it requests the representative supervisory apparatus 20A for a substitute report (step 306).

If there is no connection error detected in the step 302, the processing ends.

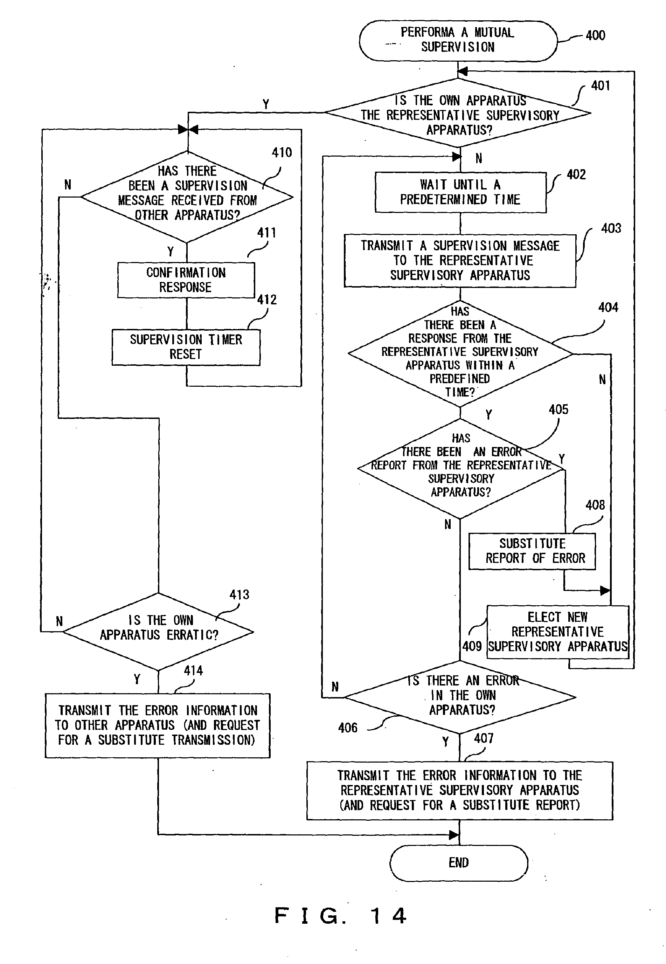

The flow chart shown by Fig. 14 exemplifies the above noted mutual supervision processing 400 performed by each supervisory apparatus 20.

That is, as the mutual supervision processing 400 is started, a supervisory apparatus 20 judges whether or not the own apparatus is the representative supervisory apparatus 20A (step 401), and, if it is not a representative supervisory apparatus 20A, waits until a predefined time of periodical supervision (step 402), and sends out a prescribed supervision message to the representative supervisory apparatus 20A by way of the general purpose buses 31 and 32 (step 403).

Then it detects either a presence or absence of confirmation response back from the representative supervisory apparatus 20A within a predetermined time (step 404) and, if there is no confirmation response, elects new representative supervisory apparatus 20A based on an assumption of the representative supervisory apparatus 20A having a problem (step 409) and goes back to the step 401. If there is a confirmation response back from the representative supervisory apparatus 20A in the step 404, further detects either a presence or absence of error report from the representative supervisory apparatus 20A (step 405) and, if there is an error report therefrom, a supervisory apparatus 20 in the next rank performs a substitute transmission of the error report for the representative supervisory apparatus 20A to the maintenance center (step 408) by using an error report substitute transmission data 42-1, followed by performing the processings in the step 409 and thereafter.

If there is no error report from the representative supervisory apparatus 20A in the step 406, it tries to detect an error in its own apparatus (step 406) and, if there is an error detected, requests the representative supervisory apparatus 20A for a substitute transmission of its own error to the maintenance center (by using an error report substitute transmission data 42-1) (step 407) and ends the processing by leaving from the supervisory operation for the supervision object apparatus 10.

That is, the representative supervisory apparatus 20A, having received an error report about a supervisory apparatus 20, records the error occurrence in the aforementioned supervisory apparatus 20 in the error flag 73 of the supervisory apparatus management table 70 and notifies the other supervisory apparatuses 20.

If there is no error detected in its own apparatus in the step 406, then it repeats the processing in the step 406 and thereafter.

If its own apparatus is judged to be the representative supervisory apparatus 20A in the above noted step 401, it supervises the receptions of prescribed supervision messages from the other supervisory apparatuses 20 (step 410) and, if there is such a message, then sends out a confirmation response back to the supervisory apparatus 20 from which the aforementioned message has been received (step 411) and resets the supervision timer for managing a threshold value of the receiving interval of supervision messages from the aforementioned supervisory apparatus 20 (step 412). That is, if there has been no supervision message received within the supervision timer from each supervisory apparatus 20 during the loop between the steps 410 and 413, the representative supervisory apparatus 20A regards the aforementioned supervisory apparatus 20 as erratic, records an error for the error flag 73 in the supervisory apparatus management table 70, notifies all the supervisory apparatuses 20 that the aforementioned specific supervisory apparatus 20 is erratic so as to be recorded in the respective supervisory apparatus management tables 70 installed in all the supervisory apparatuses 20, and removes the aforementioned specific supervisory apparatus 20 from a list of candidates for the future representative supervisory apparatus 20A.

If there is no supervision message received, it detects an error in the own apparatus (step 413) and, if no error, then goes back to the step 410.

If there is an error detected in its own apparatus in the step 413, it transmits the error information to the other supervisory apparatus 20 by way of the general purpose buses 31 and 32, requests for a substitute transmission by using an error report substitute transmission data 42-1 to the maintenance center (step 414) and ends the processing.

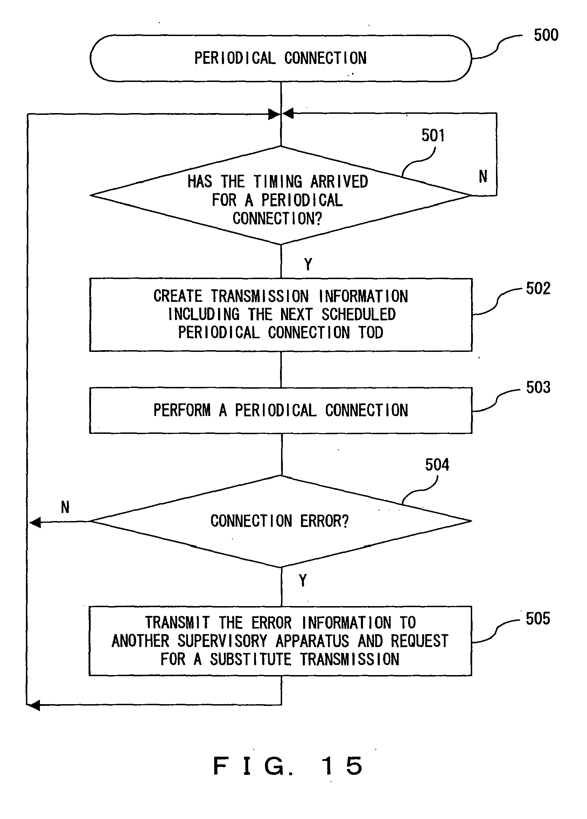

Description will be given for the above noted periodical connection processing 500 while referring to the flow chart shown by Fig. 15. All the supervisory apparatuses 20 keep supervising the timing of their own periodical connection with the maintenance center by using a not-shown timing function, et cetera, (step 501), and, when the timing for a periodical connection arrives, create transmission information including the next scheduled periodical connection TOD (step 502), perform a periodical connection with the maintenance management apparatus 50 at the maintenance center (step 503) and, if the connection is successful, repeats trying to connect periodically in a predetermined time interval as shown in the steps 501 through 504.

If the periodical connection is failed in the step 504 (step 504), the supervisory apparatus 20 collects the error information relating to the communication path 40a and the information network 40 of its own apparatus, transmits it to another supervisory apparatus 20 by way of general purpose buses 31 and 32, and requests for a substitute transmission to the maintenance center (step 505). The requested representative supervisory apparatus 20A or supervisory apparatus 20 performs a substitute transmission to the maintenance center by using the error report substitute transmission data 42-1.

The given next is a description of an operation of the maintenance management apparatus 50 at the maintenance center while referring to the flow chart shown by Fig. 16.

The maintenance management apparatus 50 supervises arrival of a connection confirmation transmission data 41 for a connection confirmation by a supervisory apparatus 20 by way of the information network 40 (step 601), and, when receiving the connection confirmation transmission data 41, confirms a presence or absence of connection management table 90 corresponding to the supervision object apparatus ID 41a and creates one if there is not (step 602). If there is already a connectionmanagement table 90 corresponding to the supervision object apparatus ID 41a on the other hand, it performs the later described step 604 and thereafter.

If then stores a time stamp indicating the received TOD in a time stamp 92 of the connection management table 90 (step 603) . The time stamp will be used for the staring point for a later described T1.

Then the maintenance management apparatus 50 stores the supervisory apparatus number 41b and the constitution information 41d (i.e., information indicating the very apparatus 20 being the "z"-th rank among the n number of the installed total supervisory apparatuses 20), et cetera, contained in the received connection confirmation transmission data 41 for the supervisory apparatus number 93 and the management information 95, respectively, in the connection management table 90 and records a transmission completion in the connection flag 94 (step 604).

And, when the connection confirmations are completed from all of the n number of supervisory apparatuses 20 installed for supervising the supervision object apparatus 10 corresponding to the specific supervision object apparatus ID 41a (step 605), the maintenance management apparatus 50 sends out one e-mail with the content such as the connection confirmation mail 43 as exemplified by Fig. 17 based on the content of the connection management table 90 to the apparatus installer terminal 100 (step 606), thereby notifying the apparatus installer that the connection confirmations have been completed for all the n number of supervisory apparatuses 20 furnished for the supervision object apparatus 10 corresponding to a specific supervision object apparatus ID 41a, and clears the connection management table 90 (step 607), followed by returning to the step 601.

If not completed in the step 605, it continues to wait for receiving a confirmation until the maximum time T1 (e.g., 10 minutes) from the TOD of the time stamp 92 (step 608) and, if a reception confirmation corresponding to the aforementioned supervision object apparatus ID 41a is received (step 609), it performs the step 604 and thereafter and registers the reception content in the connection management table 90.

If the connection confirmations from all the supervisory apparatuses 20 are not completed within the maximum time T1, it sends out one e-mail of a content such as the connection confirmation mail 44 shown by Fig. 18 based on the content of the connection management table 90 at the time to the apparatus installer terminal 100 (step 610). The connection confirmationmail 44 also contains the content of substitute transmission so that the apparatus installer can firmly comprehend a failure in the supervisory apparatus 20, et cetera.

Then the maintenance management apparatus 50 waits for connection confirmations from the remaining supervisory apparatuses 20 until the maximum time T2 (e.g., 24 hours) from the time of the time stamp 92 (step 611) and, if the connection confirmations from the remainder (step 612), registers the supervisory apparatus number 41b, et cetera, in the connection management table 90 (step 613), and sends out one e-mail (i.e., connection confirmation mail 44) to the apparatus installer terminal 100 based on the content of the connection management table 90 at the time (step 614).

The connection confirmation mail 44 also contains the content of substitute transmission so that the apparatus installer can firmly comprehend a failure in the supervisory apparatus 20, et cetera.

Then, judges whether or not the connection confirmations from all the supervisory apparatuses 20 have been received within the maximum time T2 (step 615) and, if received, goes back to the step 607, clears the connection management table 90 and goes back to the step 601. If, however, not received from the all supervisory apparatuses in the step 615, then goes back to the step 611.

As described thus far, connection confirmations with the maintenance center from a plurality of supervisory apparatuses 20 redundantly furnished for supervising the supervision object apparatus 10 required for a stable operation in a long period of time are automatically performed just by starting up one representative supervisory apparatus 20A according to the present embodiment. This eliminates a necessity of the operator 101 working manually on the cumbersome operations such as an instruction for a connection confirmation or an input of the initial setting information for each of the supervisory apparatuses 20, thus drastically simplifying connection confirmations, et cetera, for the supervisory apparatuses 20 at the time of starting up the information processing system.

That is, it is possible to perform the connection confirmation operation quickly and correctly for the redundantly furnished supervisory apparatuses 20 in a remote maintenance by the maintenance center (i.e., maintenance management apparatus 50) by utilizing the information network 40.

Meanwhile, since a result of connection confirmation with the maintenance center for a plurality of supervisory apparatuses 20 being furnished for one supervision object apparatus 10 is notified from the maintenance center to the apparatus installer (i.e., the apparatus installer terminal 100) by compiling into one e-mail also containing error information such as a substitute transmission, the apparatus installer is able to comprehend a result of the connection confirmations for the plurality of supervisory apparatuses 20 being furnished for each supervision object apparatus 10 quickly while being freed from a cumbersome work such as looking up a number of e-mails individually for the number of the supervisory apparatuses 20 under management.

Meanwhile, if there is a failure in the communication path for a specific supervisory apparatus 20, a substitute notification of the failure to the maintenance center by another supervisory apparatus 20 and therefore a fault caused by the communication path can be averted by establishing a detour for the troubled supervisory apparatus 20, thus enabling the redundantly furnished supervisory apparatuses 20 to function effectively, being unaffected by a failure in the information network 40 or the communication path 40a. As a result, a stable operation of the supervision obj ect apparatus 10 is made possible by the redundantly furnished supervisory apparatuses 20.

That is, in the remote maintenance of the redundantly furnished supervisory apparatuses 20 from the maintenance center by using the information network 40, a stable operation is made possible by the redundantly furnished supervisory apparatuses 20 without being affected by a failure in the information network 40 and the communication path 40a.

Also, a mutual supervision between the representative supervisory apparatus 20A and the supervisory apparatuses 20, an automatic switching and a substitute notification of error information to the maintenance center empower the maintenance center and the apparatus installer to comprehend the redundantly furnished supervisory apparatuses 20 correctly and accomplish a stable operation of the supervision object apparatus 10 by a precise switching of the redundantly furnished supervisory apparatuses 20.

That is, in the remote maintenance of the redundantly furnished supervisory apparatuses 20 from the maintenance center by using the information network 40, a stable operation is enabled by a correct switching of a failed supervisory apparatus 20, without being affected by a failure in the information network 40 or the communication path 40a.

Meanwhile, since the maintenance management apparatus 50 at the maintenance center does not send a confirmation mail back to each supervisory apparatus 20, there is no concern that such a confirmation mail to a supervisory apparatus 20 should be used for an illegitimate access to the supervisory apparatus 20, hence enhancing the security for the supervision object apparatus 10 and supervisory apparatus 20.

It goes without saying that the present invention is not limited by the above described embodiment and rather can be changed within the scope of the concept of the invention.

According to the present invention, a quick and correct connection confirmation operation in a short time for a remote maintenance of a redundantly furnished supervisory apparatus by using a network is enabled.

Also, in a remote maintenance of a redundantly furnished supervisory apparatus by using a network, a stable operation is made possible by the redundantly furnished supervisory apparatus without being affected by a failure in the network.

Furthermore, in a remote maintenance of a redundantly furnished supervisory apparatus by using a network, a stable operation is enabled by correctly switching a failed supervisory apparatus without being affected by a failure in the network.

## Claims

1. An information processing system comprising a redundantly furnished plurality of second information processing apparatuses (20) being commonly connected with a first information processing apparatus (10) by way of an information transmission path in order to supervise the first information processing apparatus (10), and a third information processing apparatus (50) being connected with the second information processing apparatus by way of an information network (40) in order to manage the second information processing apparatus, wherein
each of the second information processing apparatuses (20) comprises a connection confirmation control logic for trying to transmit connection confirmation information to the third information processing apparatus (50) by way of the information network (40) in compliance with an instruction being given by the one representative second information processing apparatus, and
the third information processing apparatus (50) comprises a maintenance management control logic for collecting the connection confirmation information arriving from each of the second information processing apparatuses (20) and transmitting a result of collecting the connection confirmation information by electronic mail to a manager of the first information processing apparatus (10).

2. The information processing system according to claim 1, wherein said second information processing apparatus further comprises a control logic for making another of the second information processing apparatuses (20) function as a representative, if representative said second information processing apparatus fails or the communication between the second information processing apparatus and said third information processing apparatus (50) is disabled.

3. The information processing system according to claim 1, wherein said connection confirmation control logic comprised in said second information processing apparatus further comprises the functions of:
requesting a substitute transmission of connection error information indicating a failure of transmitting said connection confirmation information and of the connection confirmation information to another of said second information processing apparatuses (20) by way of said information transmission path, if a transmission of the connection confirmation information is failed; and
performing the substitute transmission requested by the other second information processing apparatus.

4. The information processing system according to claim 1, wherein said connection confirmation control logic comprised in said second information processing apparatus further comprises the functions of:
requesting a substitute transmission of connection error information indicating a failure of transmitting said connection confirmation information, of the connection confirmation information and of an alternative connection path to another of said second information processing apparatuses (20) by way of said information transmission path, if a transmission of the connection confirmation information is failed; and
performing the substitute transmission requested by the other second information processing apparatus.

5. The information processing system according to claim 1, wherein said maintenance management control logic comprised in said third information processing apparatus (50) comprises the functions of collecting said connection confirmation information arriving from each of said second information processing apparatuses (20) in time-series stages at a predefined interval and transmitting a result of collecting the connection confirmation information in each stage by one electronic mail to a manager of said first information processing apparatus (10).

6. A control method for an information processing system comprising a redundantly furnished plurality of second information processing apparatuses (20) being commonly connected with a first information processing apparatus (10) by way of an information transmission path in order to supervise the first information processing apparatus (10) and a third information processing apparatus (50) being connected with the second information processing apparatus by way of an information network (40) in order to manage the second information processing apparatus, comprising:
a first process in which each of the second information processing apparatuses (20) tries to transmit connection confirmation information to the third information processing apparatus (50) by way of the information network (40) in compliance with an instruction being given by the one representative second information processing apparatus; and
a second process in which the third information processing apparatus (50) collects the connection confirmation information arriving fromeachof the second information processing apparatuses (20) and transmits a result of collecting the connection confirmation information by electronic mail to a manager of the first information processing apparatus (10).

7. The control method for an information processing system according to claim 6, wherein another of said second information processing apparatuses (20) is made to function as the representative second information processing apparatuses (20), if representative said second information processing apparatus fails or the communication between the second information processing apparatus and said third information processing apparatus (50) is disabled.

8. The control method for an information processing system according to claim 6, wherein
another of said second information processing apparatuses (20) is requested for a substitute transmission of connection error information indicating a failure in transmitting connection confirmation information and of the connection confirmation information byway of said information transmission path, and the substitute transmission is performed by the requested second information processing apparatus, if said second information processing apparatus fails in transmitting connection confirmation information in said first process.

9. The control method for an information processing system according to claim 6, wherein
another of said second information processing apparatuses (20) is requested for a substitute transmission of connection error information indicating a failure in transmitting connection confirmation information, of the connection confirmation information and of an alternative connection path by way of said information transmission path, and the substitute transmission is performed by the requested second information processing apparatus, if said second information processing apparatus fails in transmitting connection confirmation information in said first process.

10. The control method for an information processing system according to claim 6, wherein
said third information processing apparatus (50) collects said connection confirmation information arriving from each of said second information processing apparatuses (20), in time-series stages at a predefined interval, and transmits a result of collecting the connection confirmation information in each stage by one electronic mail to a manager of said first information processing apparatus (10) in said second process.

11. A supervisory apparatus (20), being connected to a supervision object apparatus (10) by way of an information transmission path in order to supervise the supervision object apparatus (10), comprising a connection confirmation control logic for accomplishing the functions of
performing a connection confirmation with a maintenance management apparatus (50) by way of a information network (40), prompted by an instruction from another of redundantly furnished supervisory apparatuses (20) commonly connected with the information transmission path;
requesting another of the said supervisory apparatuses (20) for a substitute transmission of connection error information indicating a failure in transmitting connection confirmation information, of the connection confirmation information and of an alternative connection path to the maintenance management apparatus (50) by way of said information transmission path, if the connection confirmation is failed; and
performing the substitute transmission requested by the other supervisory apparatus (20).

12. A maintenance management apparatus (50) which is a maintenance management apparatus (50) for collecting maintenance management information related to a plurality of redundantly furnished supervisory apparatuses (20), being connected with a supervision object apparatus (10) by way of an information transmission path, from the supervisory apparatuses (20) viaaninformationnetwork (40), comprisingamaintenance management control logic for
collecting connection confirmation information indicating a successful connection with the maintenance management apparatus (50) arriving from each of a plurality of the supervisory apparatuses (20) and transmitting a result of collecting the connection confirmation information by electronic mail to a manager of the supervision object apparatus (10).

13. The maintenance management apparatus (50) according to claim 12, said maintenance management control logic further comprises the functions of
collecting said connection confirmation information arriving from each of said supervisory apparatuses (20) in time-series stages at a predefined interval and transmitting a result of collecting the connection confirmation information in each stage by one electronic mail to a manager of said supervision object apparatus (10).

14. A signal carrying a supervisory program, which is for controlling a supervisory apparatus (20) being connected with a supervision object apparatus (10) by way of an information transmission path in order to supervise the supervision object apparatus (10), making the supervisory apparatus (20) accomplish the functions of
performing a connection confirmation with a maintenance management apparatus (50) by way of a information network (40), prompted by an instruction from another of redundantly furnished supervisory apparatuses (20) commonly connected with the information transmission path;
requesting another of the said supervisory apparatuses (20) for a substitute transmission of connection error information indicating a failure in transmitting connection confirmation information, of the connection confirmation information and of an alternative connection path to the maintenance management apparatus (50) by way of said information transmission path, if the connection confirmation is failed; and
performing the substitute transmission requested by the other supervisory apparatus (20).

15. A signal carrying a maintenance management program, which controls a maintenance management apparatus (50) for collecting maintenance management information related to a plurality of redundantly furnished supervisory apparatuses (20), being connected with a supervision object apparatus (10) by way of an information transmission path, from the supervisory apparatuses (20) via an information network (40), making the maintenance management apparatus (50) accomplish the functions of
collecting connection confirmation information indicating a successful connection with the maintenance management apparatus (50) arriving from each of a plurality of the supervisory apparatuses (20) and transmitting a result of collecting the connection confirmation information by electronic mail to a manager of the supervision object apparatus (10).

16. The signal carrying a maintenance management program according to claim 15, wherein said maintenance management apparatus (50) is further made for accomplishing the functions of
collecting said connection confirmation information arriving from each of said supervisory apparatuses (20) in time-series stages at a predefined interval and transmitting a result of collecting the connection confirmation information in each stage by one electronic mail to a manager of said supervision object apparatus (10).

17. A connection confirmation method, in a connection confirmation for a connection path independently provided between each of a plurality of supervisory apparatuses (20) being connected with a supervision object apparatus (10) and a maintenance management apparatus (50), wherein each of the supervisory apparatuses (20) perform a connection with the maintenance management apparatus (50) and a normality of the supervisory apparatuses (20) is confirmed by the maintenance management apparatus (50) sending one confirmation electronic mail to a manager of the supervision object apparatus (10) when completing the connection confirmation for all the supervisory apparatuses (20).

18. A connection confirmation method, in a connection confirmation for a connection path independently provided between each of a plurality of supervisory apparatuses (20) being connected with a supervision object apparatus (10) and a maintenance management apparatus (50), wherein each of the supervisory apparatuses (20) tries to connect with the maintenance management apparatus (50) and, if any of the supervisory apparatuses (20) fails in a connection confirmation, information related to connection path between the failed supervisory apparatus (20) and the maintenance management apparatus (50) is collected, and the connection path-related information is notified to the maintenance management apparatus (50) by way of another of the supervisory apparatuses (20) being connected with a normal connection path.

19. A connection confirmation method, in a connection confirmation for a connection path independently provided between each of a plurality of supervisory apparatuses (20) being connected with a supervision object apparatus (10) and a maintenance management apparatus (50), wherein each of the supervisory apparatuses (20) tries to connect with the maintenance management apparatus (50) and, if some of the supervisory apparatuses (20) have succeeded in connection confirmations while the remainder thereof fails therein, information related to connection path between the failed supervisory apparatus (20) and the maintenance management apparatus (50) is collected, the connection path-related information is notified to the maintenance management apparatus (50) by way of another of the supervisory apparatuses (20) being connected with a normal connection path, and the connection path-related information as well as a success or failure of the connection confirmation relating to each of the supervisory apparatuses (20) is sent to a manager of the supervision object apparatus (10) by one electronic mail.

20. A maintenance management method for a representative of a redundantly furnished plurality of supervisory apparatuses (20) being connected with a supervision obj ect apparatus (10) reporting supervisory information regarding the supervision object apparatus (10) to a maintenance management apparatus (50) by way of a network, wherein,
if the network connected with the representative supervisory apparatus (20) is disabled, then one of the supervisory apparatuses (20) other than the representative supervisory apparatus (20) is requested for reporting the supervisory information including identification information enabling an identification of a substitute reporting caused by the network failure between the representative supervisory apparatus (20) and the maintenance management apparatus (50).

21. A maintenance management method for a representative of a redundantly furnished plurality of supervisory apparatuses (20) being connected with a supervision object apparatus (10) reporting supervisory information regarding the supervision object apparatus (10) to a maintenance management apparatus (50) by way of a network, wherein,
if the network connected with the representative supervisory apparatus (20) is disabled, then path information regarding connection path failure in the network is collected, the path information and identification information indicating a substitute reporting for the representative supervisory apparatus (20) are notified to the maintenance management apparatus (50) by way of another of the supervisory apparatuses (20) being connected with the normal connection path.

22. A maintenance management method for a representative of a redundantly furnished plurality of supervisory apparatuses (20) being connected with a supervision object apparatus (10) reporting supervisory information regarding the supervision object apparatus (10) to a maintenance management apparatus (50) by way of a network, wherein,
if the network connected with the representative supervisory apparatus (20) is disabled, then information related to a failed connection path from the representative supervisory apparatus (20) is collected, the connection path-related information is reported by way of a supervisory apparatus (20) being connected with a normal connection path, network information is also collected by a supervisory apparatus (20) being connected with the normal connection path and all of the information is reported to the maintenance management apparatus (50).
